# EUROPEAN PATENT SPECIFICATION

(11) **EP 3 848 868 B1**
(45) Date of publication and mention of the grant of the patent: **11.11.2026**
(21) Application number: 19813931.3
(22) Date of filing: 06.09.2019
(51) Int. Cl.: G06Q 10/10, G06Q 50/06

(54) **METHOD AND APPARATUS FOR RECOMMENDING CHARGING STATION**
VERFAHREN UND VORRICHTUNG ZUR EMPFEHLUNG EINER LADESTATION
PROCÉDÉ ET APPAREIL DE RECOMMANDATION DE STATION DE CHARGE

(30) Priority: 07.09.2018 CN 201811043823
(43) Date of publication of application: 14.07.2021
(73) Proprietor: VOLKSWAGEN AKTIENGESELLSCHAFT, 38440 Wolfsburg (DE)
(72) Inventor: ZHANG, Xin, Beijing 100027 (CN); DUAN, Ning, Beijing 100027 (CN); SUN, Wei, Beijing 100027 (CN); GAO, Hang, Beijing 100027 (CN); LIU, Weidong, Beijing 100027 (CN)
(86) International application number: PCT/IB2019/001022
(87) International publication number: WO 2020/049364

(56) References cited:
- US-A1- 2015 158 393
- US-A1- 2017 276 503

## Description

### FIELD

The present invention relates to the field of electric vehicles, and more particularly to a method and an apparatus for recommending a charging station.

### BACKGROUND

Electric vehicles use electrical energy provided by batteries as power for endurance. Therefore, for electric vehicles, searching for and recommending a charging station are very basic and important features.

Currently, charging stations are often treated as points of interest (POI), which are searched by navigation systems and recommended to electric vehicles. Various systems and methods are known, e.g., US 2017/276503 A1 discloses a method for recommending charging station for electric vehicle and US 2015/158393 Al discloses a charging management system.

However, existing searches for charging stations often occur with recommending unsuitable charging stations to electric vehicles for charging. For example, a user wants to park and charge near a park, but he/she is recommended to park and charge near a mall or a shopping center.

### SUMMARY

In view of the above problems in prior art, embodiments of the present invention provide a method, an apparatus, a computing device and a machine-readable storage medium for recommending charging stations, which are capable of recommending a suitable charging station to an electric vehicle for charging.

A method for recommending a charging station according to an embodiment of the present invention includes: determining, based on personal preference information of a user of an electric vehicle, a specific area reachable by the electric vehicle and suitable for charging the electric vehicle, when receiving a request for searching for a charging station for the electric vehicle; recommending a suitable charging station located in the specific area to the electric vehicle for charging.

An apparatus for recommending a charging station according to an embodiment of the present invention includes: a first determination module for determining, based on personal preference information of a user of an electric vehicle, a specific area reachable by the electric vehicle and suitable for charging of the electric vehicle, when receiving a request for searching for a charging station for the electric vehicle; and a first recommendation module for recommending a suitable charging station located in the specific area to the electric vehicle for charging.

A device for recommending a charging station according to an embodiment of the present invention includes: a processor; and a memory having executable instructions stored thereon that, when executed, cause the processor to perform the aforementioned method.

A machine-readable storage medium according to an embodiment of the present invention has executable instructions stored thereon that, when executed, cause a machine to perform the aforementioned method.

The solution of embodiments of the present invention recommends a charging station to an electric vehicle for charging in accordance with personal preference information of a user of the electric vehicle, thus, in contrast to the prior art, the solution of embodiments of the present invention is capable of recommending a suitable charging station to an electric vehicle for charging.

### BRIEF DESCRIPTION OF THE DRAWINGS

The characteristics, features, advantages and benefits of the present invention will become more apparent from the detailed description below in conjunction with the accompanying drawings, wherein:
FIG. 1 shows an architectural schematic diagram of a system for recommending a charging station in accordance with one embodiment of the present invention;
FIG. 2 shows an overall flow chart of a method for information update in accordance with one embodiment of the present invention;
FIG. 3 shows an overall flow chart of a method for recommending a charging station in accordance with one embodiment of the present invention;
FIG. 4 shows a flow chart of a method for recommending a charging station in accordance with one embodiment of the present invention;
FIG. 5 shows a schematic diagram of an apparatus for recommending a charging station in accordance with one embodiment of the present invention; and
FIG. 6 shows a schematic diagram of a device for recommending a charging station in accordance with one embodiment of the present invention.

### DETAILED DESCRIPTION

Various embodiments of the present invention will be described in detail below in conjunction with the accompanying drawings.

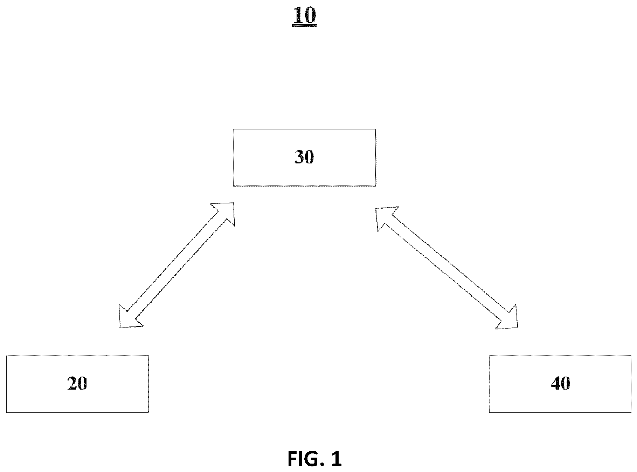

FIG. 1 shows an architectural schematic diagram of a system for recommending a charging station in accordance with one embodiment of the present invention. As shown in FIG. 1, a system 10 for recommending a charging station may comprise a monitoring device 20, a server 30, and a client device 40. The server 30 communicates with the client device 40 in a wireless manner, and the server 30 may communicate with the monitoring device 20 in a wired or wireless manner.

The monitoring device 20 is located in a charging station and each charging station has a monitoring device 20. The monitoring device 20 utilizes sensors or the like to collect and store charging time, occupancy time, and current statuses for each charging pile in the charging station where it is located. The charging time of a charging pile refers to the total accumulation time of the charging pile that occupied by vehicles for charging within a certain period of time (for example, but not limited to, one month, one quarter, half a year or one year, etc.). The occupancy time of a charging pile refers to the total accumulation time of the charging pile that occupied by the vehicle for charging and parking within a certain period of time. When a charging pile is currently being occupied by a vehicle for charging or parking, the current status of the charging pile is occupied, and when a charging pile is not currently being occupied by a vehicle, the current status of the charging pile is idle.

In one aspect, the monitoring device 20 periodically observes the status (idle or occupied) of each charging pile of the charging station ST where it is located in each of a plurality of observation windows, and counts the number of times that each charging pile of the charging station ST is observed to be idle in each period ZQi, and then a false idle index FFi of a given charging pile STi in the charging station ST is calculated according to the following equation. $FFi = {\sum }_{j = 1 j \neq i}^{n} p \left(i\right) ∗ log \left(\frac{p \left(j\right)}{p \left(i\right)}\right)$

Wherein, p(i) represents the number of times that the charging pile STi is observed to be idle in the period ZQi, p(j) represents the number of times that each of the charging piles other than the charging pile STi of the charging station ST is observed to be idle in the period ZQi, and n represents the number of charging piles of the charging station ST. The greater the false idle index FFi, the greater the likelihood that the charging pile STi will be occupied for some unknown reasons. If the false idle index of the charging pile STi is greater than a specified false threshold, the monitoring device 20 may utilize the occupancy time of charging piles other than the charging pile STi of the charging station ST to correct the occupancy time of the charging pile STi, for example, but not limited to, the average of the occupancy time of each of charging piles other than the charging pile STi of the charging station ST may be calculated as the occupancy time of the charging pile STi.

The server 30 is used to periodically acquire the charging time, occupancy time, and current statuses of respective charging piles of respective charging stations from the monitoring device 20 of the respective charging stations. The server 30 utilizes the acquired charging time and occupancy time of a given charging pile CTi to calculate the charging round of the charging pile CTi, which is equal to a ratio of the charging time to the occupancy time of the charging pile CTi. The server 30 utilizes the calculated charging round of the charging pile CTi and the acquired current status of the charging pile CTi to update the charging round and current status of the charging pile CTi stored in the server 30.

The client device 40 is located in an electric vehicle and each electric vehicle has a client device 40. When the electric vehicle EVi is to be charged, the client device 40i located in the electric vehicle EVi determines an area reachable by the electric vehicle EVi and suitable for charging the electric vehicle EVi based on the personal preference information of the user of the electric vehicle EVi. The client device 40i then determines the charging intent of the electric vehicle EVi, which may be either charge-and-go or charge-and-park. Then, the client device 40i searches for charging stations located in the determined area to find a plurality of candidate charging stations. The client device 40i acquires, from the server 30, the charging rounds and current statuses of respective charging piles of each of the plurality of candidate charging stations. Based on the charging intent of the electric vehicle EVi and the acquired charging rounds and current statuses, the client device 40i recommends a suitable one of the plurality of candidate charging stations to the electric vehicle EVi for charging. For example, but not limited to, the client device 40 may be a navigation device, an onboard computer, or any other suitable device on an electric vehicle.

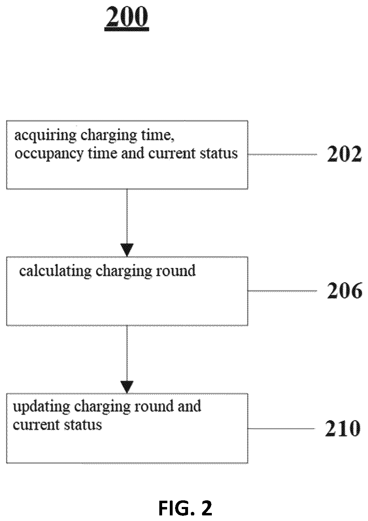

FIG. 2 shows an overall flow chart of a method for information update in accordance with one embodiment of the present invention. The method 200 of FIG. 2 will be described below in detail in conjunction with the system 10 shown in FIG. 1.

As shown in FIG. 2, at block 202, the server 30 periodically acquires the charging time, occupancy time, and current statuses of respective charging piles of respective charging stations from the monitoring devices 20 of respective charging stations.

At block 206, the server 30 calculates a ratio of the charging time to the occupancy time of a given charging pile CTi as the charging round of the charging pile CTi.

At block 210, the server 30 utilizes the calculated charging round of the charging pile CTi and the acquired current status of the charging pile CTi to update the charging round and current status of the charging pile CTi stored in the server 30.

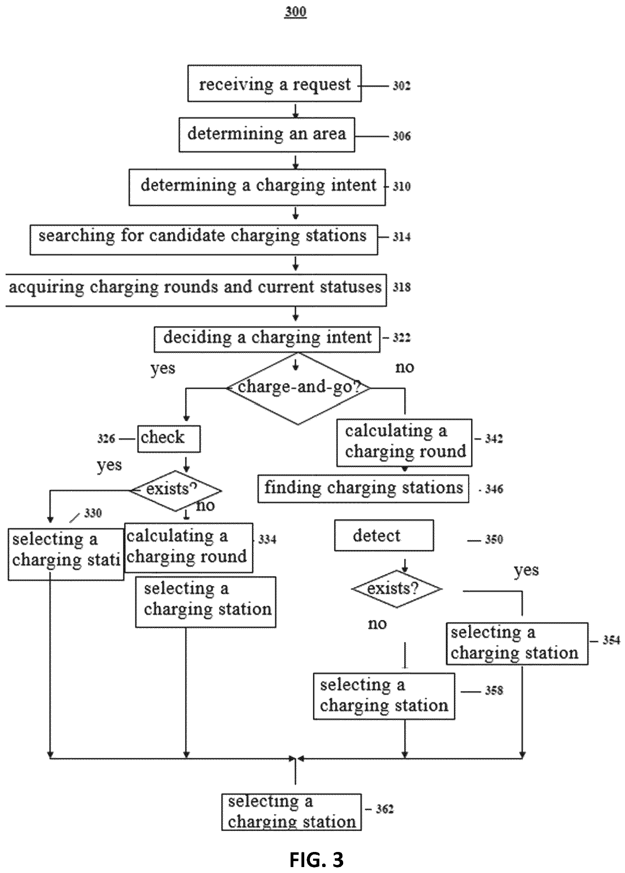

FIG. 3 shows an overall flow chart of a method for recommending a charging station in accordance with one embodiment of the present invention. The method 300 of FIG. 3 is described in detail below in conjunction with the system 10 shown in FIG. 1.

As shown in FIG. 3, at block 302, the client device 40j of the electric vehicle W receives a request Q for searching for a charging station for the electric vehicle W. For example, but not limited to, the request Q may be input into the client device 40j by the user (driver or passenger, etc.) of the electric vehicle W, or may be sent to the client device 40j by the onboard computer of the electric vehicle W based on the remaining battery power of the electric vehicle W.

At block 306, after receiving the request Q, the client device 40j determines an area CA reachable by the electric vehicle W and suitable for charging the electric vehicle W based on personal preference information PPI of the user of the electric vehicle W. Here, the personal preference information PPI indicates the personal preferences of the user of the electric vehicle W with regard to parking and charging, and the determined area CA matches the personal preference information PPI. For example, if the personal preference information PPI indicates that the user of the electric vehicle W prefers to park and charge in or near a park, the area CA will be an area containing a park. For another example, if the personal preference information PPI indicates that the user of the electric vehicle W prefers to park and charge in or near a shopping mall, the area CA will be an area containing a shopping mall. As an example, but not limited to, the personal preference information PPI may be pre-set by the user of the electric vehicle W or may be derived from the historical parking and charging record statistics of the electric vehicle W.

At block 310, the client device 40j determines the charging intent of the electric vehicle W. The charging intent may be either charge-and-go or charge-and-park. Charge-and-go means that an electric vehicle will leave after being fully charged at a charging pile and will not park in place at the charging pile, so that other electric vehicles may subsequently use the charging pile for charging. Charge-and-park means that an electric vehicle will not leave after being fully charged at a charging pile, but continues to park in place, and thus, subsequently, other electric vehicles cannot use the charging pile for charging.

In one aspect, the client device 40j may determine the charging intent of the electric vehicle W with the remaining battery power of the electric vehicle W. For example, but not limited to, if the remaining battery power of the electric vehicle W is still greater than 80% of the total amount of power when receiving the request Q, it may be determined that the charging intent of the electric vehicle W is charge-and-park, because the remaining power being greater than 80% of the total amount of power indicates that the battery power of the electric vehicle W is still sufficient, and it is not necessary indeed to charge the battery, and therefore in this case, the purpose of searching for a charging station is obviously to find a place to park, and by the way charge the vehicle while parking.

In one aspect, in the case when the electric vehicle W is currently traveling based on a navigation route, the client device 40j may determine the charging intent of the electric vehicle W with the navigation route of the electric vehicle W. Specifically, if the position of the electric vehicle W when receiving the request Q is not near the destination of the navigation route, it may be determined that the charging intent of the electric vehicle W is charge-and-go, and if the position of the vehicle W when receiving the request Q is or near the destination of the navigation route, it may be determined that the charging intent of the electric vehicle W is charge-and-park.

In one aspect, in the case when the electric vehicle W is currently traveling without using a navigation route, the client device 40j may determine the charging intent of the electric vehicle W with the historical travel trajectories of the electric vehicle W. For example, if the position of the electric vehicle W when receiving the request Q is in the area where the electric vehicle W frequently arrives and parks in the historical travel trajectories of the electric vehicle W, it may be determined that the charging intent of the electric vehicle W is charge-and-park.

In one aspect, in the case when the electric vehicle W is currently traveling without using a navigation route, the client device 40j may determine the charging intent of the electric vehicle W with the historical travel trajectory and the remaining battery power of the electric vehicle W. For example, but not limited to, if the position of the electric vehicle W when receiving the request Q is not in the area where the electric vehicle W frequently arrives and parks in the historical travel trajectories of the electric vehicle W and the remaining battery power of the electric vehicle W is less than 30% of the total amount of power, it may be determined that the charging intent of the electric vehicle W is charge-and-go.

In one aspect, after receiving the request Q, the client device 40j may allow the user of the electric vehicle W to input or select the charging intent of the electric vehicle W, thereby determining the charging intent of the electric vehicle W.

At block 314, the client device 40j searches for charging stations located in the area CA to acquire a plurality of candidate charging stations.

At block 318, the client device 40j acquires from the server 30 the charging rounds and current statuses of respective charging piles contained in each of the plurality of candidate charging stations.

At block 322, the client device 40j decides if the charging intent of the electric vehicle W is charge-and-go.

At block 326, if the decision result of block 322 is true, that is, the charging intent of the electric vehicle W is charge-and-go, the client device 40j then checks, in accordance with the current statuses of respective charging piles contained in each of the plurality of candidate charging stations, whether there is at least one charging station AL in the plurality of candidate charging stations, wherein each of the at least one charging station AL contains a plurality of charging piles that are currently in an idle status.

At block 330, if the check result of block 326 is true, the client device 40j selects the charging station closest to the electric vehicle W from the at least one charging station AL as the charging station recommended to the charging vehicle W, and then the flow proceeds to block 362.

At block 334, if the check result of block 326 is false, the client device 40j calculates the charging round of each of the plurality of candidate charging stations based on the charging rounds of respective charging piles contained in each of the plurality of candidate charging stations, wherein the charging round of each candidate charging station is equal to an average of the charging rounds of respective charging piles in the candidate charging station.

At block 338, the client device 40j selects the charging station from the plurality of candidate charging stations having the largest charging round as the charging station recommended to the charging vehicle W, and the flow proceeds to block 362.

At block 342, if the decision result of block 322 is false, that is, the charging intent of the electric vehicle W is charge-and-park, the client device 40j calculates the charging round of each of the plurality of candidate charging stations based on the charging rounds of respective charging piles contained in each of the plurality of candidate charging stations, wherein the charging round of each candidate charging station is equal to an average of the charging rounds of respective charging piles in the candidate charging station.

At block 346, the client device 40j finds from the plurality of candidate charging stations the charging station FD having a charging round less than the charging round threshold CLT. Here, the charging round threshold CLT is appropriately set such that all of the charging stations having a charging round less than the charging round threshold CLT belong to chargeable and parkable charging stations, and all of the charging stations having a charging round no less than the charging round threshold CLT belong to chargeable and unparkable charging stations.

At block 350, the client device 40j detects, based on the current statuses of respective charging piles of each of the found charging stations FD, whether there is one or more charging stations among the found charging stations FD each containing a plurality of charging piles that are currently in an idle status.

At block 354, if the detection result of block 350 is true, the client device 40j selects the charging station closest to the charging vehicle W from the one or more charging stations as the charging station recommended to the charging vehicle W, and then the flow proceeds to block 362.

At block 358, if the detection result of block 350 is false, the client device 40j selects the charging station having the largest charging round from the found charging stations FD as the charging station recommended to the charging vehicle W, and then the flow proceeds to block 362.

At block 362, the client device 40j presents the recommended charging station to the user of the charging vehicle W.

The solution of the present embodiment recommends a charging station to an electric vehicle for charging based on the personal preference information of the user of the electric vehicle, the charging intent of the electric vehicle, and the charging round characterizing the use of the charging station. Therefore, the solution of the present embodiment may recommend a suitable charging station to an electric vehicle for charging.

### Other variants

It should be appreciated by those skilled in the art that although in the above embodiment, the charging round of a charging pile is calculated by the server 30, the present invention is not limited thereto. In some other embodiments of the present invention, the charging round of a charging pile may also be calculated and stored by the monitoring device 20 periodically using the charging time and occupancy time of the charging pile. In that case, the server 30 periodically acquires the charging rounds and current statuses of respective charging piles of respective charging stations from the monitoring devices 20 of respective charging stations, and utilizes the acquired charging rounds and current statuses of respective charging piles to update the charging rounds and current statuses of respective charging piles stored in the server 30.

It should be appreciated by those skilled in the art that although in the above embodiments, the operations of blocks 302-362 are implemented by client device 40j, the present invention is not limited thereto.

In some other embodiments of the present invention, the operations of block 302-362 may also be implemented by the server 30. In that case, the client device 40j receives a request Q and sends it to the server 30, and after the server 30 has selected the charging station to be recommended to the electric vehicle W for charging, the server 30 sends the selected charging station to the client device 40j, and then the client device 40j presents the received charging station to the user of the electric vehicle W.

It should be appreciated by those skilled in the art that although in the above embodiments, a charging station is recommended to an electric vehicle for charging based on the personal preference information of the user of the electric vehicle, the charging intent of the electric vehicle, and the charging round characterizing the use of the charging station, the present invention is not limited thereto. In some other embodiments of the present invention, a charging station may also be recommended to an electric vehicle for charging merely based on personal preference information of a user of the electric vehicle. In that case, the method 300 does not include blocks 310-358, and a suitable charging station in the area CA is recommended to the electric vehicle for charging in block 362.

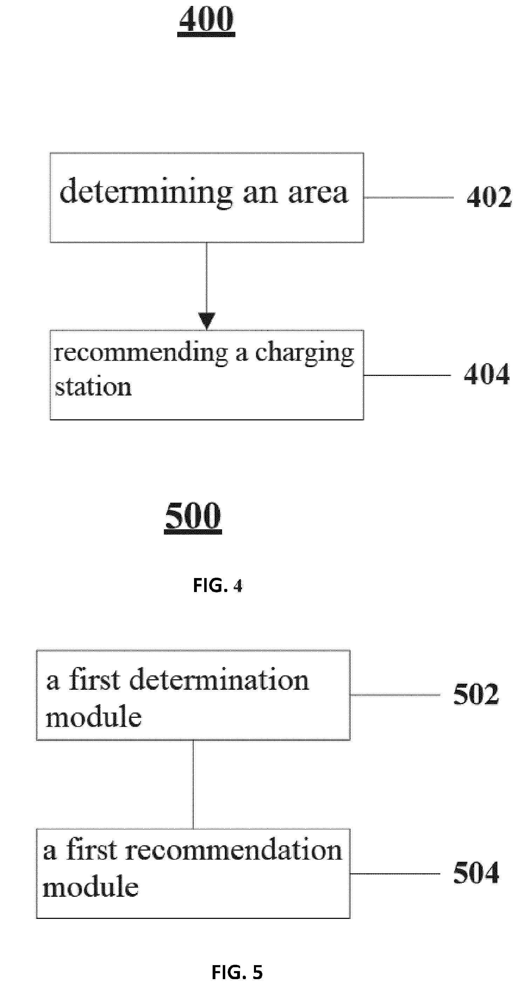

FIG. 4 shows a flow chart of a method for recommending a charging station in accordance with one embodiment of the present invention. The method 400 shown in FIG. 4 may be implemented by a client device 40, a server 30, or any other suitable devices.

As shown in FIG. 4, the method 400 may include, at block 402, determining, based on personal preference information of the user of an electric vehicle, a specific area reachable by the electric vehicle and suitable for charging the electric vehicle, when receiving a request for searching for a charging station for the electric vehicle.

The method 400 may further include, at block 404, recommending a suitable charging station located in the specific area to the electric vehicle for charging.

In a first aspect, block 404 includes: determining a charging intent of the electric vehicle; searching for charging stations located in the specific area to acquire a plurality of candidate charging stations; acquiring the charging rounds and current statuses of respective charging piles of each of the plurality of candidate charging stations, wherein the charging round of each charging pile represents a ratio of the charging time to the occupancy time of the charging pile, and the current status of each charging pile represents whether the charging pile is currently idle or not; and recommending a suitable charging station of the plurality of candidate charging stations to the electric vehicle for charging based on the determined charging intent and the acquired charging rounds and current statuses.

In a second aspect, recommending a suitable charging station of the plurality of candidate charging stations to the electric vehicle for charging includes: if the determined charging intent is charge-and-go, checking, based on the acquired current statuses, whether there is at least one charging station in the plurality of candidate charging stations, wherein each of the at least one charging station contains a plurality of charging piles that are currently idle; and selecting the charging station closest to the electric vehicle from the at least one charging station to recommend to the electric vehicle if the check result is true.

In a third aspect, recommending a suitable charging station of the plurality of candidate charging stations to the electric vehicle for charging further includes: if the check result is false, calculating, based on the acquired charging rounds, a charging round of each of the plurality of candidate charging stations, wherein the charging round of each candidate charging station represents an average of the charging rounds of respective charging piles in the candidate charging station; and selecting, from the plurality of candidate charging stations, the charging station having the largest charging round to recommend to the electric vehicle.

In a fourth aspect, recommending a suitable charging station of the plurality of candidate charging stations to the electric vehicle for charging includes: if the determined charging intent is charge-and-park, calculating, based on the acquired charging rounds, a charging round of each of the plurality of candidate charging stations, wherein the charging round of each candidate charging station represents an average of the charging rounds of respective charging piles in the candidate charging station; finding, from the plurality of candidate charging stations, charging stations having a charging round less than a charging round threshold; detecting, based on the acquired current statuses, whether there are one or more charging stations in the found charging stations each containing a plurality of charging piles that are currently idle; and if the detection result is true, selecting the charging station closest to the electric vehicle from the one or more charging stations to recommend to the electric vehicle.

In a fifth aspect, recommending a suitable charging station of the plurality of candidate charging stations to the electric vehicle for charging further includes: if the detection result is false, selecting, from the found charging stations, the charging station having the largest charging round to recommend to the electric vehicle.

In a sixth aspect, determining a charging intent of the electric vehicle includes: determining a charging intent of the electric vehicle based on remaining battery power of the electric vehicle, historical travel trajectories of the electric vehicle, and/or a navigation route of the electric vehicle.

FIG. 5 shows a schematic diagram of an apparatus for recommending a charging station in accordance with one embodiment of the present invention. The apparatus 500 shown in FIG. 5 may be implemented in software, hardware, or a combination thereof. The apparatus 500 may be installed in a client device 40, a server 30 or any other suitable devices.

As shown in FIG. 5, the apparatus 500 may include a first determination module 502 and a first recommendation module 504. The first determination module 502 is used to determining, based on personal preference information of a user of an electric vehicle, a specific area reachable by the electric vehicle and suitable for charging the electric vehicle, when receiving a request for searching for a charging station for the electric vehicle. The first recommendation module 504 is used to recommend a suitable charging station located in the specific area to the electric vehicle for charging.

In a first aspect, the first recommendation module 504 includes: a second determination module, which is used to determine a charging intent of the electric vehicle; a searching module, which is used to search for charging stations located in the specific area to acquire a plurality of candidate charging stations; an acquiring module, which is used to acquire the charging rounds and current statuses of respective charging piles of each of the plurality of candidate charging stations, wherein the charging round of each charging pile represents a ratio of the charging time to the occupancy time of the charging pile, and the current status of each charging pile represents whether the charging pile is currently idle or not; and a second recommendation module, which is used to recommend a suitable charging station of the plurality of candidate charging stations to the electric vehicle for charging based on the determined charging intent and the acquired charging rounds and current statuses.

In a second aspect, the second recommendation module may include: a first checking module, which is used to, if the determined charging intent is charge-and-go, check, based on the acquired current statuses, whether there is at least one charging station in the plurality of candidate charging stations each containing a plurality of charging piles that are currently idle; and a first selecting module, which is used to select the charging station closest to the electric vehicle from the at least one charging station to recommend to the electric vehicle if the check result is true.

In a third aspect, the second recommendation module may further include: a first calculating module, which is used to, if the check result is false, calculate, based on the acquired charging rounds, a charging round of each of the plurality of candidate charging stations, wherein the charging round of each candidate charging station represents an average of the charging rounds of respective charging piles in the candidate charging station; and a second selecting module, which is used to select, from the plurality of candidate charging stations, the charging station having the largest charging round to recommend to the electric vehicle.

In a fourth aspect, the second recommendation module may include: a second calculating module, which is used to, if the determined charging intent is charge-and-park, calculate, based on the acquired charging rounds, a charging round of each of the plurality of candidate charging stations, wherein the charging round of each candidate charging station represents an average of the charging rounds of respective charging piles in the candidate charging station; a finding module, which is used to find, from the plurality of candidate charging stations, charging stations of which the charging round is less than a charging round threshold; a detecting module, which is used to detect, based on the acquired current statuses, whether there are one or more charging stations in the found charging stations each containing a plurality of charging piles that are currently idle; and a third selecting module, which is used to select the charging station closest to the electric vehicle from the one or more charging stations to recommend to the electric vehicle if the detection result is true.

In a fifth aspect, the second recommendation module may further include: a fourth selecting module, which is used to select, from the found charging stations, the charging station having the largest charging round to recommend to the electric vehicle if the detection result is false.

In a sixth aspect, the second determination module is further used to determine a charging intent of the electric vehicle based on remaining battery power of the electric vehicle, historical travel trajectories of the electric vehicle, and/or a navigation route of the electric vehicle.

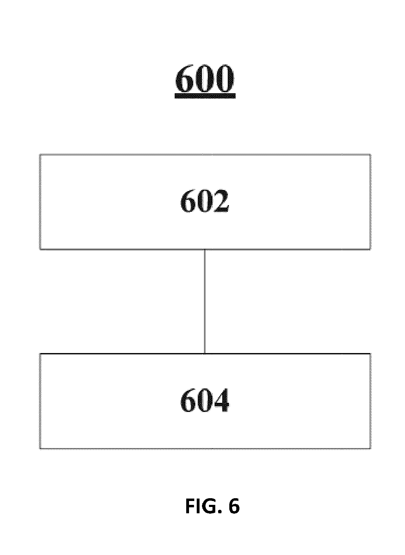

FIG. 6 shows a schematic diagram of a device for recommending a charging station in accordance with one embodiment of the present invention. The device 600 shown in FIG. 6 may be, for example, a client device 40, a server 30, or any other suitable devices.

As shown in FIG. 6, the device 600 may include a processor 602 and a memory 604, wherein the memory 604 stores executable instructions that, when executed, cause the processor 602 to perform the method 300 or the method 400.

Embodiments of the present invention also provide a machine-readable storage medium having executable instructions stored thereon that, when executed, cause a machine to perform the method 300 or the method 400.

The embodiments described above in conjunction with the drawings illustrate exemplary embodiments, but are not intended to represent all embodiments that may be implemented or fall within the scope of the claims. The term "exemplary" used throughout the specification means "serving as an example, instance, or exemplification" and does not mean "preferred" or "having advantages" over other embodiments. The embodiments include specific details for the purpose of providing an understanding of the described techniques. However, these techniques may be implemented without these specific details. In some instances, well known structures and apparatuses are shown in block diagram in order to avoid obscuring the concepts of the described embodiments.

The above description of the disclosure is provided to enable any person skilled in the art to implement or use the present disclosure. Various modifications to the present disclosure will be obvious to those skilled in the art, and the general principles defined herein may be applied to other variants without departing from the scope of the disclosure. Therefore, the present disclosure is not limited to the examples and designs described herein, but is in accordance with the broadest scope of the principles and novel features disclosed herein.

## Claims

1. A method for recommending a charging station, including:
determining, based on personal preference information of a user of an electric vehicle, a specific area reachable by the electric vehicle and suitable for charging the electric vehicle (306, 402), when receiving a request for searching for a charging station for the electric vehicle (302); and
recommending a suitable charging station located in the specific area to the electric vehicle for charging (404), wherein the recommending of a suitable charging station located in the specific area to the electric vehicle for charging includes:
determining a charging intent of the electric vehicle, wherein the charging intent of the electric vehicle comprises charge-and-go and charge-and-park (310);
searching for charging stations located in the specific area to acquire a plurality of candidate charging stations (314);
acquiring charging rounds and current statuses of respective charging piles of each of the plurality of candidate charging stations (318),
wherein the charging round of each charging pile represents a ratio of the charging time to the occupancy time of the charging pile, wherein the charging time of the charging pile refers to the total accumulation time of the charging pile that is occupied by vehicles for charging within a certain period of time and wherein the occupancy time of a charging pile refers to the total accumulation time of the charging pile that is occupied by the vehicle for charging and parking within a certain period of time, and the current status of each charging pile represents whether the charging pile is currently idle or not; and
recommending a suitable charging station of the plurality of candidate charging stations to the electric vehicle for charging based on the determined charging intent and the acquired charging rounds and current statuses (362, 404).

2. The method according to claim 1, wherein the recommending of a suitable charging station of the plurality of candidate charging stations to the electric vehicle for charging includes:
if the determined charging intent is charge-and-go, checking, based on the acquired current statuses, whether there is at least one charging station in the plurality of candidate charging stations each containing a plurality of charging piles that are currently idle; and
if the check result is true, selecting the charging station closest to the electric vehicle from the at least one charging station to recommend to the electric vehicle.

3. The method according to claim 2, wherein the recommending of a suitable charging station of the plurality of candidate charging stations to the electric vehicle for charging further includes:
if the check result is false, calculating, based on the acquired charging rounds, a charging round of each of the plurality of candidate charging stations, wherein the charging round of each candidate charging station represents an average of the charging rounds of respective charging piles in the candidate charging station; and
selecting, from the plurality of candidate charging stations, the charging station having the largest charging round to recommend to the electric vehicle.

4. The method according to claim 1, wherein the recommending of a suitable charging station of the plurality of candidate charging stations to the electric vehicle for charging includes:
if the determined charging intent is charge-and-park, calculating, based on the acquired charging rounds, a charging round of each of the plurality of candidate charging stations, wherein the charging round of each candidate charging station represents an average of the charging rounds of respective charging piles in the candidate charging station;
finding, from the plurality of candidate charging stations, charging stations having a charging round less than a charging round threshold;
detecting, based on the acquired current statuses, whether there are one or more charging stations in the found charging stations each containing a plurality of charging piles that are currently idle; and
if the detection result is true, selecting the charging station closest to the electric vehicle from the one or more charging stations to recommend to the electric vehicle.

5. The method according to claim 4, wherein the recommending of a suitable charging station of the plurality of candidate charging stations to the electric vehicle for charging further includes:
if the detection result is false, selecting, from the found charging stations, the charging station having the largest charging round to recommend to the electric vehicle.

6. The method according to claim 1, wherein the determining of a charging intent of the electric vehicle includes:
determining a charging intent of the electric vehicle based on remaining battery power of the electric vehicle, historical travel trajectories of the electric vehicle, and/or a navigation route of the electric vehicle.

7. An apparatus for recommending a charging station, including:
a first determination module (502) for determining, based on personal preference information of a user of an electric vehicle, a specific area reachable by the electric vehicle and suitable for charging the electric vehicle (306, 402), when receiving a request for searching for a charging station for the electric vehicle (302); and
a first recommendation module (504) for recommending a suitable charging station located in the specific area to the electric vehicle for charging (404), wherein the first recommendation module includes:
a second determination module for determining a charging intent of the electric vehicle (310), wherein the charging intent of the electric vehicle comprises charge-and-go and charge-and-park;
a searching module for searching for charging stations located in the specified area reachable by the electric vehicle to acquire a plurality of candidate charging stations (314);
an acquiring module for acquiring charging round and current status of respective charging piles of each of the plurality of candidate charging stations (318),
wherein the charging round of each charging pile represents a ratio of the charging time to the occupancy time of the charging pile, wherein the charging time of the charging pile refers to the total accumulation time of the charging pile that is occupied by vehicles for charging within a certain period of time and wherein the occupancy time of a charging pile refers to the total accumulation time of the charging pile that is occupied by the vehicle for charging and parking within a certain period of time, and the current status of each charging pile represents whether the charging pile is currently idle or not; and
a second recommendation module for recommending a suitable charging station of the plurality of candidate charging stations to the electric vehicle for charging based on the determined charging intent and the acquired charging rounds and current statuses (362, 404).

8. The apparatus of claim 7, wherein the second recommendation module includes:
a first checking module for, if the determined charging intent is charge-and-go, checking, based on the acquired current statuses, whether there is at least one charging station in the plurality of candidate charging stations each containing a plurality of charging piles that are currently idle; and
a first selecting module for, if the check result is true, selecting the charging station closest to the electric vehicle from the at least one charging station to recommend to the electric vehicle.

9. The apparatus of claim 8, wherein the second recommendation module further includes:
a first calculating module for, if the check result is false, calculating, based on the acquired charging rounds, a charging round of each of the plurality of candidate charging stations, wherein the charging round of each candidate charging station represents an average of the charging rounds of respective charging piles in the candidate charging station; and
a second selecting module for selecting, from the plurality of candidate charging stations, the charging station having the largest charging round to recommend to the electric vehicle.

10. The apparatus of claim 7, wherein the second recommendation module includes:
a second calculating module for, if the determined charging intent is charge-and-park, calculating, based on the acquired charging rounds, a charging round of each of the plurality of candidate charging stations, wherein the charging round of each candidate charging station represents an average of the charging rounds of respective charging piles in the candidate charging station;
a finding module for finding, from the plurality of candidate charging stations, charging stations having a charging round less than a charging round threshold;
a detecting module for detecting, based on the acquired current statuses, whether there are one or more charging stations in the found charging stations each containing a plurality of charging piles that are currently idle; and
a third selecting module for, if the detection result is true, selecting the charging station closest to the electric vehicle from the one or more charging stations to recommend to the electric vehicle.

11. The apparatus of claim 10, wherein the second recommendation module further includes:
a fourth selecting module for, if the detection result is false, selecting, from the found charging stations, the charging station having the largest charging round to recommend to the electric vehicle.

12. The apparatus of claim 7, wherein
the second determination module is further used for: determining a charging intent of the electric vehicle based on remaining battery power of the electric vehicle, historical travel trajectories of the electric vehicle, and/or a navigation route of the electric vehicle.

13. A device for recommending a charging station, including:
a processor; and
a memory having executable instructions stored thereon that, when executed, cause the processor to perform the method of any of claims 1-6.

14. A machine readable storage medium having executable instructions stored thereon that, when executed, cause a machine to perform the method of any of claims 1-6.

## Patentansprüche

1. Verfahren zum Empfehlen einer Ladestation, einschließlich:
Bestimmen, basierend auf persönlichen Präferenzinformationen eines Benutzers eines Elektrofahrzeugs, eines spezifischen Bereichs, der durch das Elektrofahrzeug erreichbar und zum Laden des Elektrofahrzeugs (306, 402) geeignet ist, wenn eine Anforderung zum Suchen nach einer Ladestation für das Elektrofahrzeug (302) empfangen wird; und
Empfehlen einer geeigneten Ladestation, die sich in dem spezifischen Bereich befindet, an das Elektrofahrzeug zum Laden (404),
wobei das Empfehlen einer geeigneten Ladestation, die sich in dem spezifischen Bereich befindet, an das Elektrofahrzeug zum Laden einschließt:
Bestimmen einer Ladeabsicht des Elektrofahrzeugs, wobei die Ladeabsicht des Elektrofahrzeugs Laden-und-Losfahren und Laden-und-Parken (310) umfasst;
Suchen nach Ladestationen, die sich in dem spezifischen Bereich befinden, um eine Vielzahl von Kandidatenladestationen (314) zu erfassen;
Erfassen von Ladedurchgängen und aktuellen Status jeweiliger Ladesäulen jeder der Vielzahl von Kandidatenladestationen (318),
wobei die Laderunde jeder Ladesäule ein Verhältnis der Ladezeit zu der Belegungszeit der Ladesäule darstellt, wobei sich die Ladezeit der Ladesäule auf die gesamte kumulierte Zeit der Ladesäule bezieht, die innerhalb eines festgelegten Zeitraums von Fahrzeugen zum Laden belegt ist, und wobei sich die Belegungszeit einer Ladesäule auf die gesamte kumulierte Zeit der Ladesäule bezieht, die innerhalb eines festgelegten Zeitraums von dem Fahrzeug zum Laden und Parken belegt ist, und der aktuelle Status jeder Ladesäule darstellt, ob die Ladesäule aktuell frei ist oder nicht; und
Empfehlen einer geeigneten Ladestation aus der Vielzahl von Kandidatenladestationen an das Elektrofahrzeug zum Laden basierend auf der bestimmten Ladeabsicht und den erfassten Laderunden und aktuellen Status (362, 404).

2. Verfahren nach Anspruch 1, wobei das Empfehlen einer geeigneten Ladestation aus der Vielzahl von Kandidatenladestationen an das Elektrofahrzeug zum Laden einschließt:
falls die bestimmte Ladeabsicht Laden-und-Losfahren ist, Prüfen, basierend auf den erfassten aktuellen Status, ob mindestens eine Ladestation in der Vielzahl von Kandidatenladestationen vorhanden ist, die jeweils eine Vielzahl von Ladesäulen enthalten, die aktuell frei sind; und
falls das Prüfergebnis wahr ist, Auswählen der dem Elektrofahrzeug am nächsten gelegenen Ladestation aus der mindestens einen Ladestation, um sie dem Elektrofahrzeug zu empfehlen.

3. Verfahren nach Anspruch 2, wobei das Empfehlen einer geeigneten Ladestation aus der Vielzahl von Kandidatenladestationen dem Elektrofahrzeug zum Laden ferner einschließt:
falls das Prüfergebnis falsch ist, Berechnen, basierend auf den erfassten Laderunden, einer Laderunde jeder der Vielzahl von Kandidatenladestationen, wobei die Laderunde jeder Kandidatenladestation einen Durchschnitt der Laderunden der jeweiligen Ladesäulen in der Kandidatenladestation darstellt; und
Auswählen, aus der Vielzahl von Kandidatenladestationen, der Ladestation, die die größte Laderunde aufweist, um sie dem Elektrofahrzeug zu empfehlen.

4. Verfahren nach Anspruch 1, wobei das Empfehlen einer geeigneten Ladestation aus der Vielzahl von Kandidatenladestationen dem Elektrofahrzeug zum Laden einschließt:
falls die bestimmte Ladeabsicht Laden-und-Parken ist, Berechnen, basierend auf den erfassten Laderunden, einer Laderunde jeder der Vielzahl von Kandidatenladestationen, wobei die Laderunde jeder Kandidatenladestation einen Durchschnitt der Laderunden der jeweiligen Ladesäulen in der Kandidatenladestation darstellt;
Ermitteln, aus der Vielzahl von Kandidatenladestationen, von Ladestationen, die eine Laderunde aufweisen, die kleiner als ein Laderundenschwellenwert ist;
Erkennen, basierend auf den erfassten aktuellen Status, ob eine oder mehrere Ladestationen in den ermittelten Ladestationen vorhanden sind, die jeweils eine Vielzahl von Ladesäulen enthalten, die aktuell frei sind; und
falls das Erkennungsergebnis wahr ist, Auswählen der dem Elektrofahrzeug am nächsten gelegenen Ladestation aus der einen oder den mehreren Ladestationen, um sie dem Elektrofahrzeug zu empfehlen.

5. Verfahren nach Anspruch 4, wobei das Empfehlen einer geeigneten Ladestation aus der Vielzahl von Kandidatenladestationen an das Elektrofahrzeug zum Laden ferner einschließt:
falls das Erkennungsergebnis falsch ist, Auswählen der Ladestation, aus den ermittelten Ladestationen, die die größte Laderunde aufweist, um sie dem Elektrofahrzeug zu empfehlen.

6. Verfahren nach Anspruch 1, wobei das Bestimmen einer Ladeabsicht des Elektrofahrzeugs einschließt:
Bestimmen einer Ladeabsicht des Elektrofahrzeugs basierend auf einer verbleibenden Batterieleistung des Elektrofahrzeugs, historischen Fahrttrajektorien des Elektrofahrzeugs und/oder einer Navigationsroute des Elektrofahrzeugs.

7. Einrichtung zum Empfehlen einer Ladestation, die einschließt:
ein erstes Bestimmungsmodul (502) zum Bestimmen, basierend auf persönlichen Präferenzinformationen eines Benutzers eines Elektrofahrzeugs, eines spezifischen Bereichs, der durch das Elektrofahrzeug erreichbar und zum Laden des Elektrofahrzeugs (306, 402) geeignet ist, wenn eine Anforderung zum Suchen nach einer Ladestation für das Elektrofahrzeug (302) empfangen wird; und
ein erstes Empfehlungsmodul (504) zum Empfehlen einer geeigneten Ladestation, die sich in dem spezifischen Bereich befindet, an das Elektrofahrzeug zum Laden (404), wobei das erste Empfehlungsmodul einschließt:
ein zweites Bestimmungsmodul zum Bestimmen einer Ladeabsicht des Elektrofahrzeugs (310), wobei die Ladeabsicht des Elektrofahrzeugs Laden-und-Losfahren und Laden-und-Parken umfasst;
ein Suchmodul zum Suchen nach Ladestationen, die sich in dem spezifizierten, durch das Elektrofahrzeug erreichbaren Bereich befinden, um eine Vielzahl von Kandidatenladestationen (314) zu erfassen;
ein Erfassungsmodul zum Erfassen von Laderunde und aktuellem Status jeweiliger Ladesäulen jeder der Vielzahl von Kandidatenladestationen (318),
wobei die Laderunde jeder Ladesäule ein Verhältnis der Ladezeit zu der Belegungszeit der Ladesäule darstellt, wobei sich die Ladezeit der Ladesäule auf die gesamte kumulierte Zeit der Ladesäule bezieht, die innerhalb eines festgelegten Zeitraums von Fahrzeugen zum Laden belegt ist, und wobei sich die Belegungszeit einer Ladesäule auf die gesamte kumulierte Zeit der Ladesäule bezieht, die innerhalb eines festgelegten Zeitraums von dem Fahrzeug zum Laden und Parken belegt ist, und der aktuelle Status jeder Ladesäule darstellt, ob die Ladesäule aktuell frei ist oder nicht; und
ein zweites Empfehlungsmodul zum Empfehlen einer geeigneten Ladestation der Vielzahl von Kandidatenladestationen des Elektrofahrzeugs zum Laden basierend auf der bestimmten Ladeabsicht und den erfassten Laderunden und des aktuellen Status (362, 404).

8. Einrichtung nach Anspruch 7, wobei das zweite Empfehlungsmodul einschließt:
ein erstes Prüfmodul zum Prüfen, falls die bestimmte Ladeabsicht Laden-und-Losfahren ist, basierend auf den erfassten aktuellen Status, ob mindestens eine Ladestation in der Vielzahl von Kandidatenladestationen vorhanden ist, die jeweils eine Vielzahl von Ladesäulen enthalten, die aktuell frei sind; und
ein erstes Auswahlmodul zum Auswählen, falls das Prüfergebnis wahr ist, der dem Elektrofahrzeug am nächsten gelegene Ladestation aus der mindestens einen Ladestation, um sie dem Elektrofahrzeug zu empfehlen.

9. Einrichtung nach Anspruch 8, wobei das zweite Empfehlungsmodul ferner einschließt:
ein erstes Berechnungsmodul zum Berechnen, falls das Prüfergebnis falsch ist, basierend auf den erfassten Laderunden, einer Laderunde jeder der Vielzahl von Kandidatenladestationen, wobei die Laderunde jeder Kandidatenladestation einen Durchschnitt der Laderunden jeweiliger Ladesäulen in der Kandidatenladestation darstellt; und
ein zweites Auswahlmodul zum Auswählen, aus der Vielzahl von Kandidatenladestationen, der Ladestation, die die größte Laderunde aufweist, um sie dem Elektrofahrzeug zu empfehlen.

10. Einrichtung nach Anspruch 7, wobei das zweite Empfehlungsmodul einschließt:
ein zweites Berechnungsmodul zum Berechnen, falls die bestimmte Ladeabsicht Laden-und-Parken ist, basierend auf den erfassten Laderunden, einer Laderunde jeder der Vielzahl von Kandidatenladestationen, wobei die Laderunde jeder Kandidatenladestation einen Durchschnitt der Laderunden jeweiliger Ladesäulen in der Kandidatenladestation darstellt;
ein Ermittlungsmodul zum Ermitteln, aus der Vielzahl von Kandidatenladestationen, von Ladestationen, die eine Laderunde aufweisen, die kleiner als ein Laderundenschwellenwert ist;
ein Erkennungsmodul zum Erkennen, basierend auf den erfassten aktuellen Status, ob eine oder mehrere Ladestationen unter den ermittelten Ladestationen vorhanden sind, die jeweils eine Vielzahl von Ladesäulen aufweisen, die aktuell frei sind; und
ein drittes Auswahlmodul zum Auswählen, falls das Erkennungsergebnis wahr ist, aus der einen oder den mehreren Ladestationen der dem Elektrofahrzeug am nächsten gelegene Ladestation, um sie dem Elektrofahrzeug zu empfehlen.

11. Einrichtung nach Anspruch 10, wobei das zweite Empfehlungsmodul ferner einschließt:
ein viertes Auswahlmodul zum Auswählen, falls das Erkennungsergebnis falsch ist, aus den ermittelten Ladestationen, der Ladestation, die die größte Laderunde aufweist, um sie dem Elektrofahrzeug zu empfehlen.

12. Einrichtung nach Anspruch 7, wobei
das zweite Bestimmungsmodul ferner verwendet wird zum: Bestimmen einer Ladeabsicht des Elektrofahrzeugs basierend auf der verbleibenden Batterieleistung des Elektrofahrzeugs, historischen Fahrttrajektorien des Elektrofahrzeugs und/oder einer Navigationsroute des Elektrofahrzeugs.

13. Einrichtung zur Empfehlung einer Ladestation, einschließlich:
einen Prozessor; und
einen Speicher, der ausführbare Anweisungen darauf gespeichert aufweist, die, wenn sie ausgeführt werden, den Prozessor veranlassen, das Verfahren nach einem der Ansprüche 1 bis 6 durchzuführen.

14. Maschinenlesbares Speichermedium, das ausführbare Anweisungen darauf gespeichert aufweist, die, wenn sie ausgeführt werden, eine Maschine veranlassen, das Verfahren nach einem der Ansprüche 1 bis 6 durchzuführen.

## Revendications

1. Procédé de recommandation d'une station de recharge, comportant :
la détermination, en fonction d'informations de préférences personnelles d'un utilisateur d'un véhicule électrique, d'une zone spécifique atteignable par le véhicule électrique et appropriée pour la recharge du véhicule électrique (306, 402), lors de la réception d'une demande de recherche d'une station de recharge pour le véhicule électrique (302) ; et
la recommandation d'une station de recharge appropriée localisée dans la zone spécifique au véhicule électrique pour la recharge (404),
dans lequel la recommandation d'une station de recharge appropriée localisée dans la zone spécifique au véhicule électrique pour la recharge comporte :
la détermination d'une intention de recharge du véhicule électrique, dans lequel l'intention de recharge du véhicule électrique comprend recharge-et-départ et recharge-et-stationnement (310) ;
la recherche de stations de recharge localisées dans la zone spécifique pour acquérir une pluralité de stations de recharge candidates (314) ;
l'acquisition de cycles de recharge et d'états actuels de bornes de recharge respectives de chacune parmi la pluralité de stations de recharge candidates (318),
dans lequel le cycle de recharge de chaque borne de recharge représente un rapport du temps de recharge au temps d'occupation de la borne de recharge, dans lequel le temps de recharge de la borne de recharge fait référence au temps total cumulé de la borne de recharge, qui est occupé par des véhicules pour la recharge au sein d'un certain laps de temps et dans lequel le temps d'occupation d'une borne de recharge fait référence au temps total cumulé de la borne de recharge, qui est occupé par le véhicule pour la recharge et le stationnement au cours d'un certain laps de temps, et l'état actuel de chaque borne de recharge représente le fait que la borne de recharge est actuellement inutilisée ou non ; et
la recommandation d'une station de recharge appropriée de la pluralité de stations de recharge candidates au véhicule électrique pour la recharge en fonction de l'intention de recharge déterminée et des cycles de recharge et états actuels acquis (362, 404).

2. Procédé selon la revendication 1, dans lequel la recommandation d'une station de recharge appropriée de la pluralité de stations de recharge candidates au véhicule électrique pour la recharge comporte :
si l'intention de recharge déterminée est recharge-et-départ, le fait de vérifier, en fonction des états actuels acquis, s'il y a au moins une station de recharge dans la pluralité de stations de recharge candidates contenant chacune une pluralité de bornes de recharge qui sont actuellement inutilisées ; et
si le résultat de vérification est vrai, la sélection de la station de recharge la plus proche du véhicule électrique parmi l'au moins une station de recharge à recommander au véhicule électrique.

3. Procédé selon la revendication 2, dans lequel la recommandation d'une station de recharge appropriée de la pluralité de stations de recharge candidates au véhicule électrique pour la recharge comporte en outre :
si le résultat de vérification est faux, le calcul, en fonction des cycles de recharge acquis, d'un cycle de recharge de chacune parmi la pluralité de stations de recharge candidates, dans lequel le cycle de recharge de chaque station de recharge candidate représente une moyenne des cycles de recharge de bornes de recharge respectives dans la station de recharge candidate ; et
la sélection, parmi la pluralité de stations de recharge candidates, de la station de recharge ayant le cycle de recharge le plus grand à recommander au véhicule électrique.

4. Procédé selon la revendication 1, dans lequel la recommandation d'une station de recharge appropriée de la pluralité de stations de recharge candidates au véhicule électrique pour la recharge comporte :
si l'intention de recharge déterminée est recharge-et-stationnement, le calcul, en fonction des cycles de recharge acquis, d'un cycle de recharge de chacune parmi la pluralité de stations de recharge candidates, dans lequel le cycle de recharge de chaque station de recharge candidate représente une moyenne des cycles de recharge de bornes de recharge respectives dans la station de recharge candidate ;
le fait de découvrir, parmi la pluralité de stations de recharge candidates, des stations de recharge ayant un cycle de recharge inférieur à un seuil de cycle de recharge ;
le fait de détecter, en fonction des états actuels acquis, s'il y a une ou plusieurs stations de recharge dans les stations de recharge découvertes contenant chacune une pluralité de bornes de recharge qui sont actuellement inutilisées ; et
si le résultat de détection est vrai, la sélection de la station de recharge la plus proche du véhicule électrique parmi la ou les stations de recharge à recommander au véhicule électrique.

5. Procédé selon la revendication 4, dans lequel la recommandation d'une station de recharge appropriée de la pluralité de stations de recharge candidates au véhicule électrique pour la recharge comporte en outre :
si le résultat de détection est faux, la sélection, parmi les stations de recharge découvertes, de la station de recharge ayant le cycle de recharge le plus grand à recommander au véhicule électrique.

6. Procédé selon la revendication 1, dans lequel la détermination d'une intention de recharge du véhicule électrique comporte :
la détermination d'une intention de recharge du véhicule électrique en fonction d'une puissance de batterie restante du véhicule électrique, de trajectoires historiques de déplacement du véhicule électrique, et/ou d'un itinéraire de navigation du véhicule électrique.

7. Appareil de recommandation d'une station de recharge, comportant :
un premier module de détermination (502) pour la détermination, en fonction d'informations de préférences personnelles d'un utilisateur d'un véhicule électrique, d'une zone spécifique atteignable par le véhicule électrique et appropriée pour la recharge du véhicule électrique (306, 402), lors de la réception d'une demande de recherche d'une station de recharge pour le véhicule électrique (302) ; et
un premier module de recommandation (504) pour la recommandation d'une station de recharge appropriée localisée dans la zone spécifique au véhicule électrique pour la recharge (404), dans lequel le premier module de recommandation comporte :
un second module de détermination pour la détermination d'une intention de recharge du véhicule électrique (310), dans lequel l'intention de recharge du véhicule électrique comprend recharge-et-départ et recharge-et-stationnement ;
un module de recherche pour la recherche de stations de recharge localisées dans la zone spécifique atteignable par le véhicule électrique pour acquérir une pluralité de stations de recharge candidates (314) ;
un module d'acquisition pour l'acquisition d'un cycle de recharge et d'un état actuel de bornes de recharge respectives de chacune parmi la pluralité de stations de recharge candidates (318),
dans lequel le cycle de recharge de chaque borne de recharge représente un rapport du temps de recharge au temps d'occupation de la borne de recharge, dans lequel le temps de recharge de la borne de recharge fait référence au temps total cumulé de la borne de recharge, qui est occupé par des véhicules pour la recharge au sein d'un certain laps de temps et dans lequel le temps d'occupation d'une borne de recharge fait référence au temps total cumulé de la borne de recharge, qui est occupé par le véhicule pour la recharge et le stationnement au cours d'un certain laps de temps, et l'état actuel de chaque borne de recharge représente le fait que la borne de recharge est actuellement inutilisée ou non ; et
un second module de recommandation pour la recommandation d'une station de recharge appropriée de la pluralité de stations de recharge candidates au véhicule électrique pour la recharge en fonction de l'intention de recharge déterminée et des cycles de recharge et états actuels acquis (362, 404).

8. Appareil selon la revendication 7, dans lequel le second module de recommandation comporte :
un premier module de vérification pour, si l'intention de recharge déterminée est recharge-et-départ, vérifier, en fonction des états actuels acquis, s'il y a au moins une station de recharge dans la pluralité de stations de recharge candidates contenant chacune une pluralité de bornes de recharge qui sont actuellement inutilisées ; et
un premier module de sélection pour, si le résultat de vérification est vrai, la sélection de la station de recharge la plus proche du véhicule électrique parmi l'au moins une station de recharge à recommander au véhicule électrique.

9. Appareil selon la revendication 8, dans lequel le second module de recommandation comporte en outre :
un premier module de calcul pour, si le résultat de vérification est faux, le calcul, en fonction des cycles de recharge acquis, d'un cycle de recharge de chacune parmi la pluralité de stations de recharge candidates, dans lequel le cycle de recharge de chaque station de recharge candidate représente une moyenne des cycles de recharge de bornes de recharge respectives dans la station de recharge candidate ; et
un deuxième module de sélection pour la sélection, parmi la pluralité de stations de recharge candidates, de la station de recharge ayant le cycle de recharge le plus grand à recommander au véhicule électrique.

10. Appareil selon la revendication 7, dans lequel le second module de recommandation comporte :
un second module de calcul pour, si l'intention de recharge déterminée est recharge-et-stationnement, le calcul, en fonction des cycles de recharge acquis, d'un cycle de recharge de chacune parmi la pluralité de stations de recharge candidates, dans lequel le cycle de recharge de chaque station de recharge candidate représente une moyenne des cycles de recharge de bornes de recharge respectives dans la station de recharge candidate ;
un module de découverte pour découvrir, parmi la pluralité de stations de recharge candidates, des stations de recharge ayant un cycle de recharge inférieur à un seuil de cycle de recharge ;
un module de détection pour détecter, en fonction des états actuels acquis, s'il y a une ou plusieurs stations de recharge dans les stations de recharge découvertes contenant chacune une pluralité de bornes de recharge qui sont actuellement inutilisées ; et
un troisième module de sélection pour, si le résultat de détection est vrai, la sélection de la station de recharge la plus proche du véhicule électrique parmi la ou les stations de recharge à recommander au véhicule électrique.

11. Appareil selon la revendication 10, dans lequel le second module de recommandation comporte en outre :
un quatrième module de sélection pour, si le résultat de détection est faux, la sélection, parmi les stations de recharge découvertes, de la station de recharge ayant le cycle de recharge le plus grand à recommander au véhicule électrique.

12. Appareil selon la revendication 7, dans lequel
le second module de détermination est utilisé en outre pour : la détermination d'une intention de recharge du véhicule électrique en fonction de la puissance de batterie restante du véhicule électrique, de trajectoires historiques de déplacement du véhicule électrique, et/ou d'un itinéraire de navigation du véhicule électrique.

13. Dispositif de recommandation d'une station de recharge, comportant :
un processeur ; et
une mémoire ayant des instructions exécutables stockées dans celle-ci qui, lorsqu'elles sont exécutées, amènent le processeur à mettre en œuvre le procédé selon l'une quelconque des revendications 1 à 6.

14. Support de stockage lisible par machine ayant des instructions exécutables stockées sur celui-ci qui, lorsqu'elles sont exécutées, amènent une machine à mettre en œuvre le procédé selon l'une quelconque des revendications 1 à 6.
